# EUROPEAN PATENT APPLICATION

(11) **EP 1 548 719 A2**
(43) Date of publication of application: **29.06.2005**
(21) Application number: 04028846.6
(22) Date of filing: 06.12.2004
(51) Int. Cl.: G11B 7/09

(54) **Optical disk device and phase difference detector**

(30) Priority: 25.12.2003 JP 2003431163
(71) Applicant: Kabushiki Kaisha Toshiba, Tokyo 105-8001 (JP)
(72) Inventor: Kojima, Satoru, c/o Intellectual Property Division, Minato-ku Tokyo 105-8001 (JP); Yonezawa, Minoru, Intellectual Property Division, Minato-ku Tokyo 105-8001 (JP)
(74) Representative: Henkel, Feiler & Hänzel

(57) **Abstract**

A first reading signal to a fourth reading signal (A to D) are acquired with a four division element from an optical disk (D). The first reading signal and a third reading signal (A and C) are sampled and added at a predetermined timing to obtain a first addition signal (A+C), while the second reading signal and the fourth reading signal (B and D) are sampled and added at a predetermined to obtain a second addition signal (B+D). A phase difference signal of the first addition signal (A+C) and the second addition signal (B+D) are detected by repeating comparison of the two signals until the same value is attained by differing sampling timing with respect to the first addition signal (A+C) and the second addition signal (B+D) when the same value is not attained in the first addition signal (A+C) and the second addition signal (B+D) in the comparison with the result that the tracking control is conducted based on the detected phase difference signal.

## Description

The present invention relates to an optical disk device and a phase difference detector and, more particularly to an optical disk device and a phase difference detector having a digital phase difference detection circuit that acquires a phase difference of a detection signal for a tracking control.

As is well known, an optical disk such as a DVD (Digital Versatile Disk) or the like is prevalent as a digital recording medium in recent years. Along with it, a high reliability is desired in the optical disk device for playing back such optical disk as well. In such optical disk, a memory area is provided on spiral tracks and track numbers contain address information.

Furthermore, at the time of the process of a fast forward and a fast reverse when playing back, after conveying a pickup with a motor, a fine adjustment (tracking control) is conducted for each track by appropriately tilting a lens with an actuator. The tracking control at this time is conducted with a tracking error signal which is a phase difference of a signal which is obtained by subjecting to a diagonal addition a detection signal from a four division optical detector of an optical pickup.

Jpn. Pat. Appln. KOKAI Publication No. 11-149649 shows an optical disk device in which a tracking error signal for tracking control is determined with a phase difference of the signal which is obtained by subjecting to a diagonal addition a detection signal from a four division optical detector of an optical pickup.

However, Jpn. Pat. Appln. KOKAI Publication No. 11-149649 described above shows a generally known analog type phase difference detection circuit where a binarization sampling of a diagonal addition (A+C, B+D) of each of the four surfaces of the four division light detector is conducted for comparison to determine a differential, and furthermore, a long-time binarization sampling for comparison is required in order to adjust the offset and detect the phase difference.

That is, since the circuit is an analog type detection circuit, there arises a problem in that a long time processing is required with a relatively large-scale circuit until a phase difference signal for the tracking control is obtained.

The present invention has been made in consideration of the above circumstances, and an object of the invention is to provide an optical disk device and a phase difference detector having a phase difference, signal detection circuit formed of a digital circuit which is small in size and having a fast processing speed for creating a phase difference signal used in the tracking control.

According to one aspect of the present invention, there is provided an optical disk device comprising: a reading section configured to output first to fourth reading signals by reading reflection light of a beam spot which is applied to the optical disk with a four division element; first addition sections configured to output a first addition signal in such a manner that the first reading signal and the third reading signal from the reading section are sampled and added at a predetermined timing; second addition sections configured to output a second addition signal in such a manner that the second reading signal and the fourth reading signal from the reading section are sampled and added at a predetermined timing; detection sections configured to detect a phase difference signal between the first addition signal and the second addition signal by repeating comparison until the same value is attained by differing the sampling timings of the first addition sections and the second addition sections when the same value is not attained by comparing the first addition signal and the second addition signal; and control sections configured to control the beam spot in tracking based on the phase difference signal from the detection sections.

According to another aspect of the present invention, there is provided a phase difference detector comprising: a comparison section configured to compare a first signal sampled at the first timing with a second signal sampled at the second timing; and detection sections configured to detect a phase difference signal of the first signal and the second signal by repeating comparison until the same value is attained by differing timing with respect to the first and the second timing when the same value is not attained in the first signal and the second signal in the comparison section.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram for explaining an optical disk device according to a embodiment of the present invention;
FIG. 2 is a block diagram for explaining the detail of a pickup of a digital phase difference detection circuit of the optical disk device according to the embodiment;
FIG. 3 is a block diagram for explaining the detail of the digital phase difference detection circuit of the optical disk according to the embodiment;
FIG. 4 is a timing diagram for explaining one example of a detection signal used by a digital phase difference detection circuit of the optical disk device according to the embodiment;
FIG. 5 is a timing diagram for explaining one example of processing when the digital phase difference detection circuit of the optical disk device according to the embodiment is not used;
FIG. 6 is a flowchart for explaining processing operation of a digital phase difference detection circuit of the optical disk device according to the embodiment;
FIG. 7 is a timing diagram for explaining processing operation of a digital phase difference detection circuit of the optical disk device according to the embodiment; and
FIG. 8 is a timing diagram for explaining a processing operation of a digital phase difference detection circuit of the optical disk device according to the embodiment.

Hereinafter, one embodiment of the present invention will be explained in detail by referring to the drawings. The embodiment which will be described below will be explained by using as an example an optical disk device having a phase difference detection circuit for detecting a tracking error signal TE which is a phase difference of the tracking signal for use in the tracking control. However, the phase difference detector according to the present invention is a technology which can be applied when the phase difference of an analog signal is detected with a general electronic device.

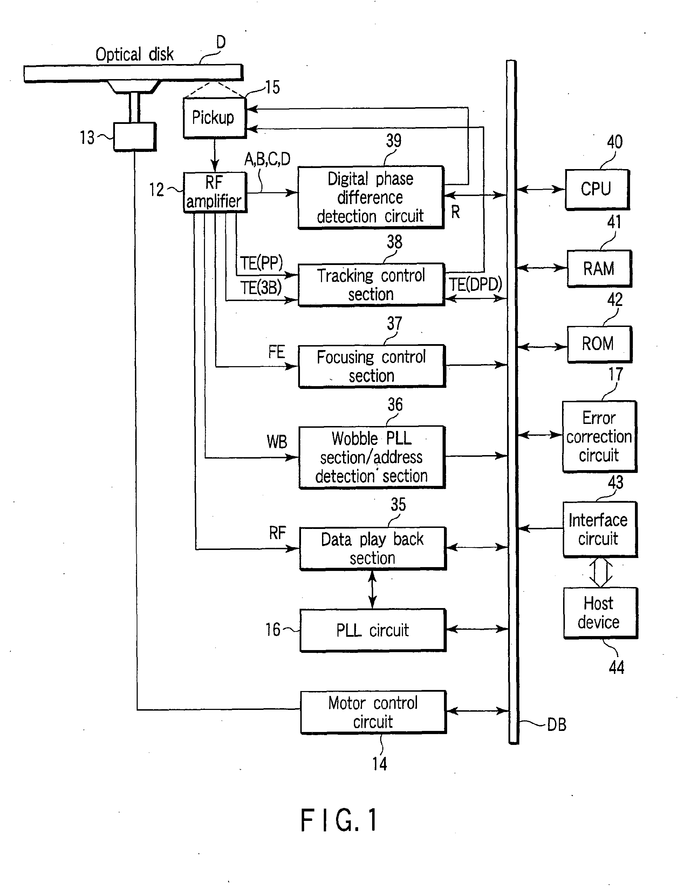

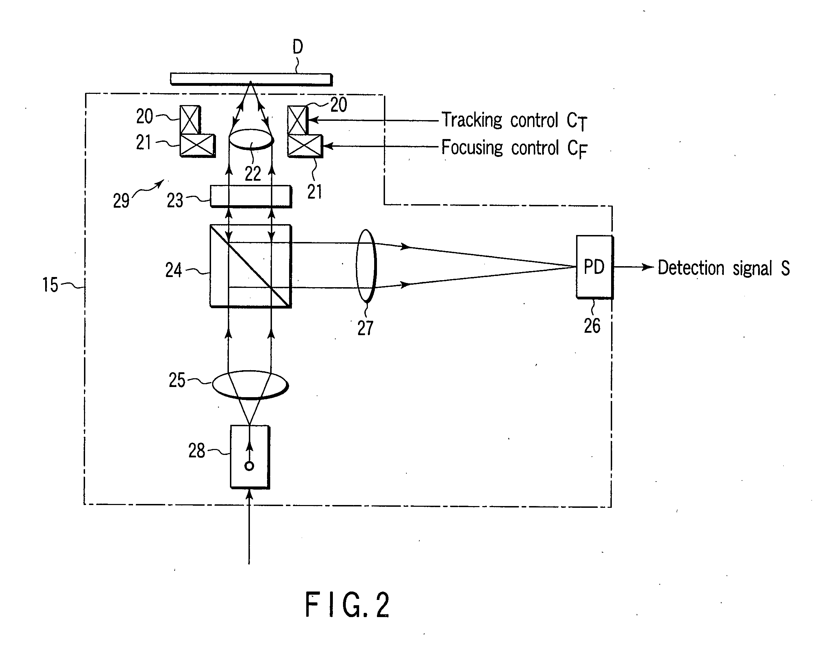

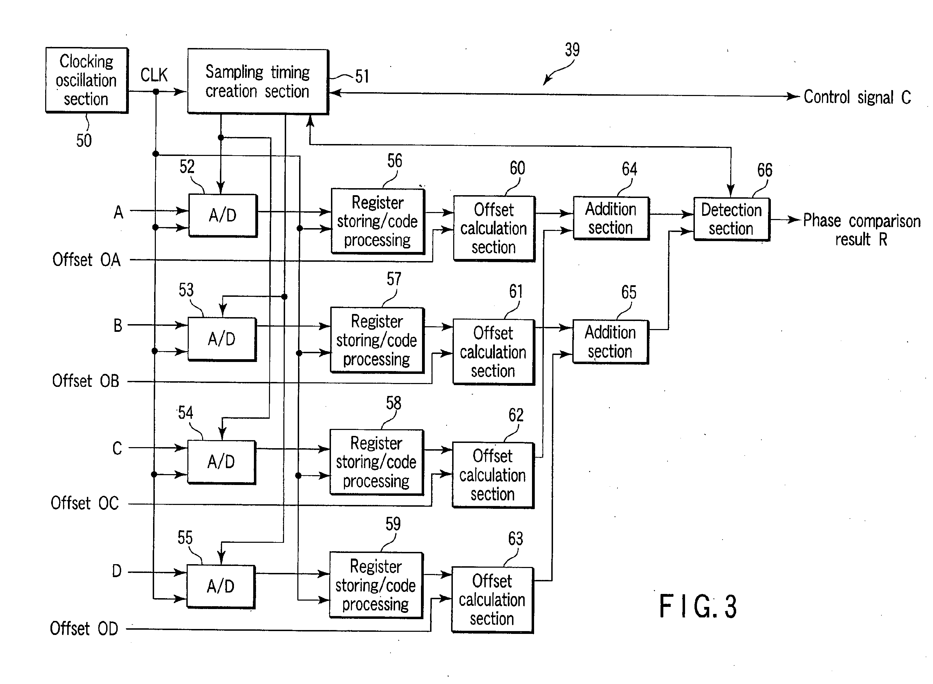

FIG. 1 is a block diagram showing an optical disk device for explaining the embodiment. FIG. 2 is a block diagram showing the detail of the pickup of the optical disk device according to the embodiment. FIG. 3 is a block diagram showing the detail of the digital phase difference detection circuit of the optical disk device according to the embodiment. <Optical disk device according to the present embodiment>

### (Structure and Operation)

One example of the optical disk device according to the embodiment has a configuration shown in FIG. 1. Here, an optical disk D is an optical disk which is capable of recording user data items or an optical disk dedicated for reading the data items. In this embodiment, the optical disk will be explained as an optical disk which is capable of recording data items. The optical disk which is capable of recording data items includes optical disks such as a DVD-R, a DVD-RAM, a CD-R, and a CD-RW.

On the surface of the optical disk D, rand tracks and groove tracks are formed in a spiral configuration. This optical disk D is rotated and driven with a spindle motor 13. Information items with respect to the optical disk D are recorded and played back on the optical disk D with a pickup 15.

On the pickup 15, an object lens 22 is provided as shown in FIG. 2. The object lens 22 can be moved in a focusing direction (an optical axis direction of the lens) with the driving of the drive coil 21. Furthermore, the object lens 22 can be moved in a tracking direction (a direction vertical to the optical axis of the lens) with the driving of the drive coil 20. The tracking control can be conducted with the movement of the beam spot of the laser light.

A semiconductor laser diode 28 generates laser light in accordance with a signal which is supplied from a laser control circuit not shown. The laser light generated from the semiconductor laser diode 28 is applied on the optical disk D via a collimator lens 25, a half prism 24, an optical system 23, and an object lens 22. The reflection light from the optical disk D is guided to a light detector 26 via the object lens 22, the optical system 23, a half prism 24 and a light collection lens 27.

### (Tracking Error/Focusing Error)

The light detector 26 comprises four division light detection cells which supply signals A, B, C and D to an RF amplifier 12. As described later, the RF amplifier 12 supplies the signals A, B. C and D to the digital phase difference detection circuit 39. The digital phase difference detection circuit 39 supplies the phase difference comparison result R to the CPU 40 via the data bus DB.

In addition, the RF amplifier 12 supplies a focus error signal FE which is (A+C)-(B+D) to a focusing control section 37. Furthermore, the RF amplifier 12 supplies a wobble signal WB which is (A+C)-(B+D) to the wobble PLL section/address detection section 36 and supplies the RF signal which is (A+C)-(B+D) to the data play back section 35.

Here, the RF amplifier 12 supplies to the tracking control section 38 the tracking error signal TE (PP) which is created by the push-pull method, and the tracking error signal TE (3B) which is created by the 3 beam method.

Here, the DPD method, the PP method and the 3 beam method will be simply explained. The DPD method is a phase difference detection method of the digital phase difference detection circuit 39 which will be explained in this embodiment. The DPD method is a method for detecting a phase difference from the diagonal calculation of the pickup and adjusting the lens with the phase difference. The PP method is a method for adjusting the lens from the differential value of the output sum of the inside and the outside of the radial direction of the track. The differential value is (A+D)-(B+C). The 3 beam method is a method for adjusting the lens from the differential value of the light amount of the two beams by arranging main beams and two sub-beams on the track.

Furthermore, the tracking control section 38 creates a track drive signal in accordance with the tracking error signal TE (DPD) created by the CPU 40 based on the phase difference result signal R supplied from the digital phase difference detection circuit 39 and supplies the signal to the drive coil 20 in the tracking direction.

Furthermore, the tracking error signal is selected in the tracking control section 38 depending upon the disk type. In the play back system of the CD (CD-ROM or the like) the TE (3B) by the 3 beam method is selected. In the recording system of the CD (CD-R, CD-RW or the like), the TE (PP) or the TE (3B) by the 3 beam method/PP method is selected. In the play back system of the DVD (DVD-ROM or the like), the TE (DPD) by the DPD method is selected. In the recording system of the DVD (DVD-RAM, DVD-R, DVD-RW or the like, the TE (PP) by the PP method is selected. Here, in the next generation DVD as well, the DPD method is used in the play back system and the PP method is used in the recording system.

On the other hand, the output signal of the focusing control section 37 is supplied to the focusing drive coil 21. As a consequence thereof, laser light is constantly controlled to a just focus on the recording film of the optical disk D.

As a result of the focusing control and the tracking control, the sum signal RF of the output signal of the light detection cell in the light detector 26 is such that a change in the reflection rate from the pit or the like which is formed on the tracks of the optical disk D in accordance with the record information is reflected. This signal is supplied to the data play back section 35.

### (Other Processing)

When the object lens 22 is controlled with the above tracking control section 38, the pickup 15 is controlled with the control of the thread motor not shown so that the object lens 22 is located at the most appropriate position of the optical disk.

The data play back section 35 plays back record data items based on the play back clock signal from a PLL circuit 16. Furthermore, the data play back section 35 has a function of measuring an amplitude of the signal RF and the measured value is read with the CPU 40.

Furthermore, the motor control circuit 14, the laser control circuit, the PLL circuit 16, the data play back section 35, the focusing control section 37, the tracking control section 38, the digital phase difference detection circuit 39 and the like can be configured in one LSI chip as a servo control circuit. Furthermore, these circuits can be controlled with the CPU 40 via the bus DB.

The CPU 40 generally controls this optical disk device in accordance with the operation command provided from a host device 44 via an interface circuit 43. Furthermore, the CPU 40 uses the RAM 41 as a working area, and a predetermined operation is conducted in accordance with a control program recorded on the ROM 42.

Furthermore, as shown in FIG. 3, the digital phase difference detection circuit 39 has a clock oscillation section 50 and A/D circuits 52, 53, 54 and 55 for performing A/D conversion with the supply of a clock signal CLK in connection with the clock oscillation section 50 and with the supply of a reading signal A, a reading signal B, a reading signal C, and a reading signal D respectively from the RF amplifier 12.

Furthermore, the digital phase difference detection circuit 39 has a register storing/code processing section 56, 57, 58 and 59 which receives an output of each of the A/D circuits 52, 53, 54 and 55 and the clock signal CLK, and the circuit 39 has an offset calculation sections 60, 61, 62 and 63 which receives this output and each of the offset signals OA, OB, OC and OD.

Furthermore, the digital phase difference detection circuit 39 has an addition section 64 which receives from these offset calculation sections 60 and 62 two calculation signals offset in accordance with the detection signal A and C for addition processing and an addition section 65 which receives two calculation signal offset in accordance with the detection signals B and D from the offset calculation sections 61 and 63 for addition processing, and respective addition results are supplied to the detection section 66 which performs a comparison processing of signals. The detection section 66 supplies the phase comparison result R to the CPU 40 or the like via, for example, the data bus DB.

Furthermore, the digital phase difference detection circuit 39 has a sampling timing creation section 51. This sampling timing creation section 51 receives a clock signal CLK from the clock oscillation section 50 and receives a phase comparison result R from the detection section 66 and the CPU 40 to create an appropriate sampling timing signal and supply the signal to the A/D circuits 52, 53, 54 and 55. <Operation of the digital phase difference detection circuit of optical disk device according to the present embodiment>

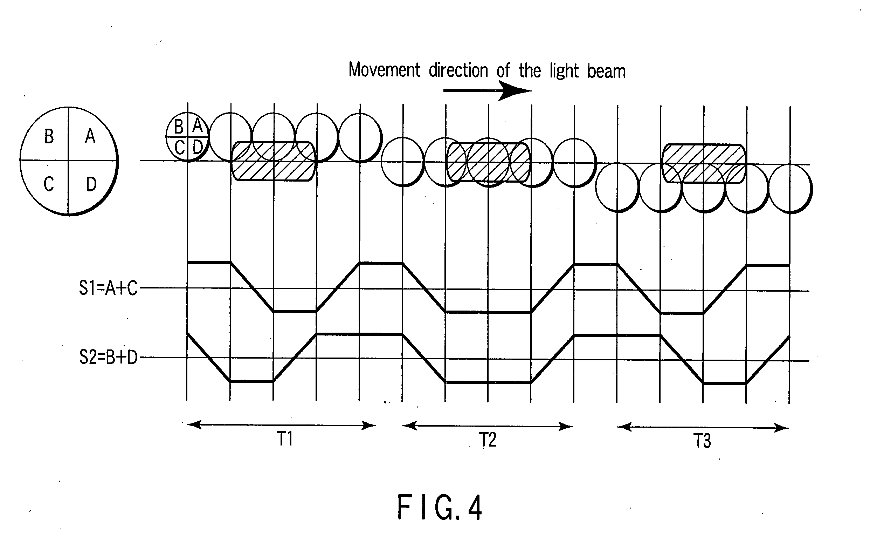

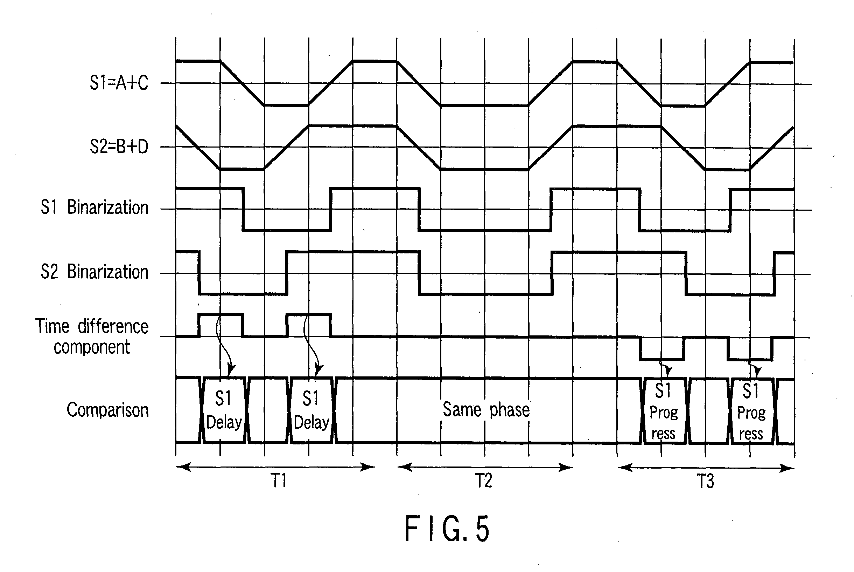

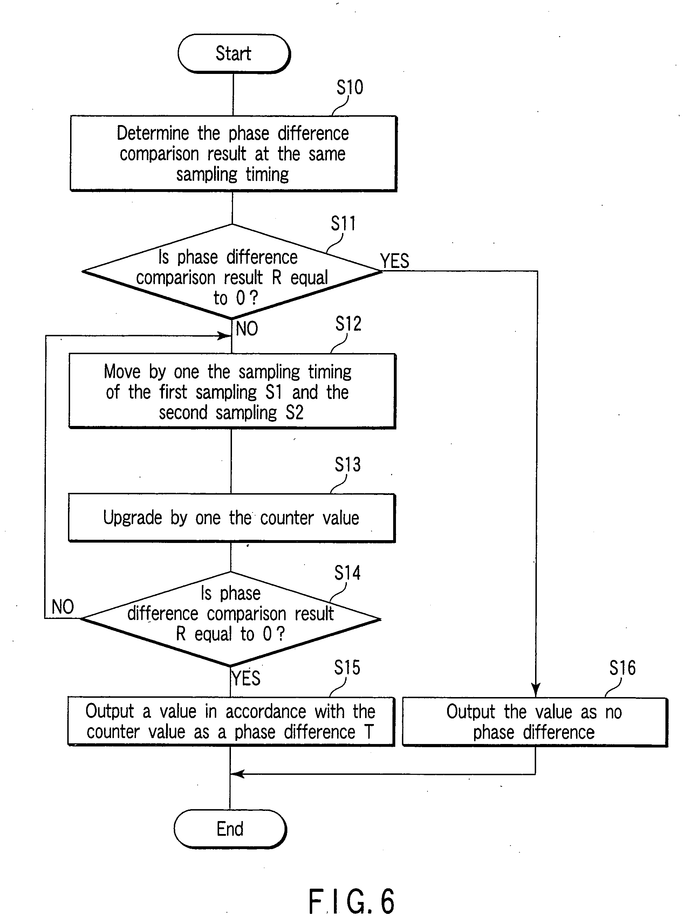

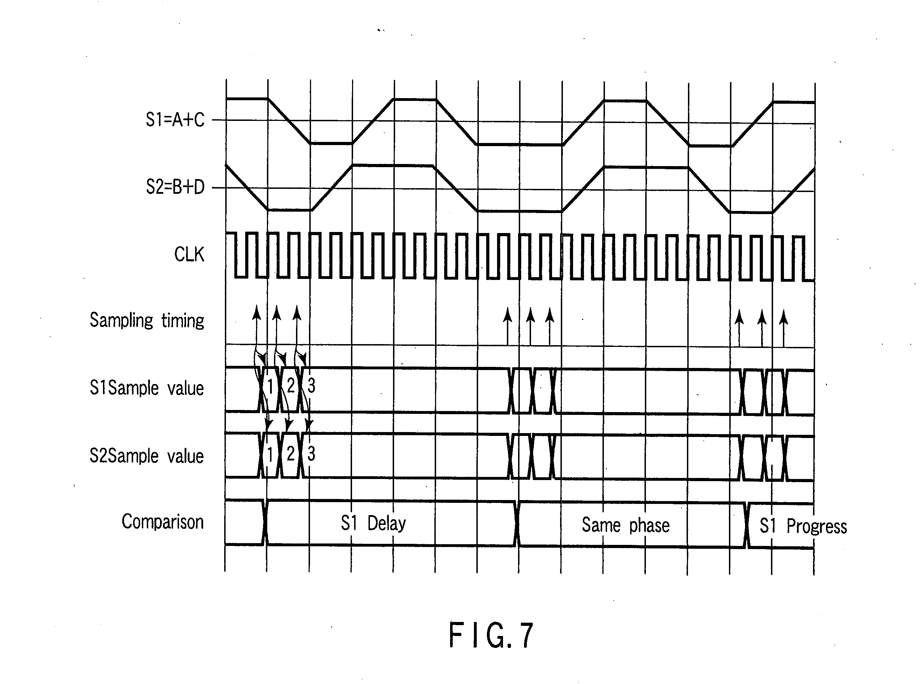

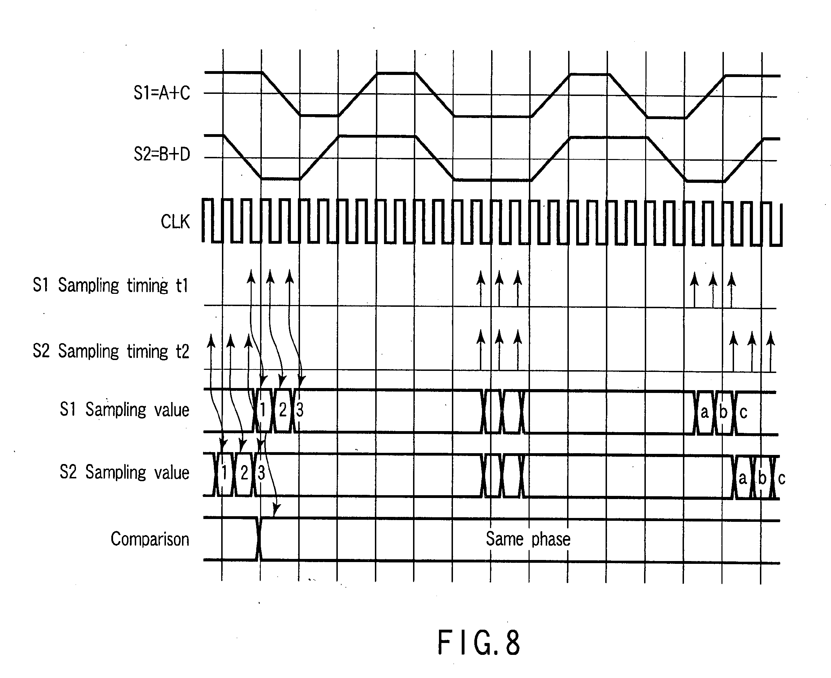

Hereinafter, an operation of the digital phase difference detection circuit of the above optical disk device will be explained in detail by using the drawings. FIG. 4 is a timing diagram showing one example of a detection signal used by the digital phase difference detection circuit of the optical disk device according to the embodiment. FIG. 5 is a timing diagram showing one example of the processing when the digital phase difference detection circuit of the optical disk device according to the embodiment is not used. FIG. 6 is a flowchart showing one example of the processing of the digital phase difference detection circuit of the optical disk according to the embodiment. FIG. 7 is a timing diagram showing one example of the processing of the digital phase difference detection circuit of the optical disk device according to the embodiment. FIG. 8 is a timing diagram showing one example of the processing of the digital phase difference detection circuit of the optical disk device according to the embodiment.

### (General Phase Difference Detection Circuit)

In the beginning, a concept of the general phase difference detection circuit will be explained. In FIG. 4, the beam spot detected by the light detector 26 shown in FIG. 2 generates a track shift above the timing chart in the period T1. Next, the beam spot shows a state free from the track shift in the period T2. Lastly, the beam spot generates a track shift below the timing chart in the period T3.

It has been made clear that the track shift of such beam spot is generated in the phase difference shift of the signals S1 and S2 which are diagonal addition (A+C, B+D: tracking error signal) of each of the four surfaces of the four division light detector in the light detector 26. Consequently, when the tracking control is performed, it is required to detect with certitude a phase difference shift of the signals S1 and S2 which are diagonal addition.

### (Phase difference detection circuit not using the present embodiment)

Next, there will be explained a case in which a phase difference shift of the signals S1 and S2 which are diagonal addition is detected with the phase difference detection circuit not using the embodiment. That is, with the DPD method shown in FIG. 5, the light beam reflected from the optical disk is detected with the four division light detector, the diagonal addition S1 (=A+C) and S2 (=B+D) of each of the four surfaces of the four division light detector are determined and the results S1 an S2 of these diagonal additions are subjected to binarization processing as shown in FIG. 5.

Furthermore, the time difference components of each of the binarization signals S1 and S2 are determined, and this time difference components are used for the tracking control as a phase difference signal. In this manner, since the phase difference signal is determined from the relative relations of the diagonal addition signals S1 and S2, a long time comparison is required in the phase difference.

Incidentally, in FIG. 5, the relation between the beam and pit is shifted to the left in the period T1. Next, there is shown a case in which on-track is conducted in the period T2, and subsequently the relation is shifted to the right in the period T3. When the output of the signal is observed in each of the periods T1 to T3, S1 (A+C) and S2 (B+D) are changed in phase as shown in FIG. 5 with the result that the phase is delayed in the period T1, the same phase is generated in the period T2 and the phase progress is shown in the period T3.

### (Digital phase difference detection circuit according to the present embodiment)

Next, the above phase difference detection processing by the above digital phase difference detection circuit according to the embodiment will be explained in detail by using the drawings. According to the embodiment, when the presence of the phase difference of the signal obtained as the diagonal addition of the outputs A, B, C and D of the light detector 26 is detected, the size of the phase difference is detected by differing the sampling timing at the time of the A/D conversion of the outputs A, B, C and D.

As a consequence, the same function as the conventional analog type phase difference detector is realized with a small-scale digital circuit which performs swifter processing.

In the digital phase difference detection circuit 39 according to the embodiment, the signals A, B, C and D from the four division light detector 26 shown in FIG. 2 are supplied via the RF amplifier 12, a phase difference at that point of time is recognized with the CPU 40 by outputting the phase difference comparison result R to the CPU 40 or the like via the data bus DB in accordance with the control operation of the sampling timing by the CPU 40.

That is, firstly, in the digital phase difference detection circuit 39, the clock signal CLK from the clock oscillation section 50 is received. From the sampling timing creation section 51, the same timing signals are given to each of the A/D circuits 52, 53, 54 and 55 from the sampling timing creation section 51.

As a consequence, at each of the A/D circuits 52, 53, 54 and 55, the signals A, B, C and D are subjected to A/D conversion as shown in FIG. 7 at the same sampling timing to be digitalized.

Upon receipt of these signals A, B, C and D, the register storing/code processing section 56, 57, 58 and 59 store data items in the register to conduct further code processing. Thereafter, these digital signals and offset values OA, OB, OC and OD given in advance are respectively given to the offset calculation sections 60, 61, 62 and 63. Based on these values, the digital signals A, B, C and D are offset calculated.

Next, in the flowchart shown in FIG. 6, the digital signal A and the digital signal C which are subjected to offset calculation are added at the addition section 64. In the same manner, the digital signal B and the digital signal D which are subjected to offset calculation are added at the addition section 64. The addition result is compared and treated at the detection section 66 of the phase difference. Then, the addition result is output to the CPU 40 or the like via, for example, the data bus DB (S10) as the phase difference result R.

Here, when phase difference result is either "0" or a small value limitlessly approximate to "0" (S11), the phase difference is not present. Consequently, the CPU 40 determines that the phase difference is not present, so that the tracking control is not conducted (S16).

Next, when this phase difference result is not "0" (S11), the CPU 40 determines that the phase difference is present. Consequently, the control signal C is supplied to the sampling timing creation section 51 in order to conduct sampling by shifting by one clock a sampling clock of the S1 sampling and the S2 sampling (S12).

As a consequence, as shown in FIG. 8, the sampling timing creation section 51 supplies the sampling timing t1 for S1 and the sampling timing t2 for S2 by shifting by one clock. Then, the CPU 40 raises by one a counter value of the incorporated counter (S13). The aforementioned phase difference comparison processing is conducted again with the operation of such sampling timing. Consequently, it is determined that phase difference comparison result R becomes "0" or not (S14).

When the phase difference comparison result R becomes "0", it is thought that the phase difference of one clock section is present. The CPU 40 determines that the phase difference is one clock section. In this manner, the phase difference is given in one clock CLK unit. Unless the phase difference comparison result R does not become "0", it is further determined that the movement of the sampling timing t1 is required. Furthermore, it is determined that the movement of the sampling timing t1 is required, and the process returns to step S12 to continue the same operation.

Then the process continues until the phase difference comparison result R becomes "0". The CPU 40 outputs the phase difference T in accordance with the counter value at the time when the phase difference comparison result R becomes "0" to the tracking control section 38, for example, as a tracking error signal TE (DPD) (S15).

The tracking control section 38 conducts the tracking control by moving the beam spot in a tracking direction (a direction vertical to the optical axis of the lens) with the drive of the drive coil 20 by supplying the drive signal in accordance with the tracking signal to the drive coil 20.

Furthermore, here, as described above, it is preferable to select the tracking error signal in the tracking control section 38 depending upon the disk type as one example. For example, in the play back system of the CD (CD-ROM or the like), it is preferable to select the TE (3B) by the 3 beam method. In the recording system of the CD (CD-R, CD-RW or the like), it is preferable to select the TE (PP) or TE (3B) by the 3 beam method/PP method. In the play back system of the DVD (DVD-ROM or the like), it is preferable to select the TE (DPD) by the DPD method. In the recording system of the DVD (DVD-RAM, DVD-R, DVD-RW or the like), it is preferable to select the TE (PP) by the PP method.

Here, in the next generation DVD, the DPD method is used in the play back system while the PP method is used in the recording system. However, the embodiment is not limited to the selection method described here. In accordance with the technological situation, it becomes possible to select one of these control methods, or to use these methods in combination.

According to the digital phase difference detection method according to the embodiment described above, the system can be configured with a digital circuit in a small scale instead of the analog circuit section. Further, a swift detection of the phase difference can be conducted with a small scale circuit by comparing the signals only with the shifted sampling timing.

Furthermore, in the above embodiment, the function of the control section is conducted by the CPU 40. It is preferable that the operation of the control section is realized as the function of, for example, the sampling timing creation section 51 of the digital phase difference detection circuit 30. By doing so, it becomes possible to supply a tracking error signal TE (DPD) to the tracking control section 38 directly from the digital phase detection section 39 without the mediation of the CPU 40.

Furthermore, in the above embodiment, there has been explained, as an example, a case in which the phase difference detection circuit is used in the creation of the tracking error signal (DPD) for the tracking control of the optical. However, the embodiment is not limited thereto. It is preferable to apply the circuit to the digital phase difference detection circuit in the device for treating other signals.

Incidentally, the present invention is not limited to the above embodiment as it is. At the stage of realizing the embodiment, it is possible to transform and embody in various manners constituent elements within the scope of deviating from the gist of the invention. Furthermore, it is possible to form various types of invention by appropriately combining a plurality of constituent elements which are disclosed in the above embodiment. For example, some constituent elements can be removed from all the constituent elements shown in the embodiment. Furthermore, the constituent elements according to different embodiments can be appropriately combined.

## Claims

1. An optical disk device **characterized by** comprising:
a reading section (15) configured to output first to fourth reading signals (A to D) by reading reflection light of a beam spot which is applied to the optical disk (D) with a four division element;
first addition sections (52, 54 and 64) configured to output a first addition signal (A+C) in such a manner that the first reading signal (A) and the third reading signal (C) from the reading section (15) are sampled and added at a predetermined timing;
second addition sections (53, 55 and 65) configured to output a second addition signal (B+D) in such a manner that the second reading signal (B) and the fourth reading signal (D) from the reading section (15) are sampled and added at a predetermined timing;
detection sections (51, 66) configured to detect a phase difference signal between the first addition signal (A+C) and the second addition signal (B+D) by repeating comparison until the same value is attained by differing the sampling timings of the first addition sections (52, 54 and 64) and the second addition sections (53, 55 and 65) when the same value is not attained by comparing the first addition signal (A+C) and the second addition signal (B+D); and
control sections (35 and 38) configured to control the beam spot in tracking based on the phase difference signal from the detection sections (51 and 66).

2. An optical disk device according to claim 1, **characterized in that** the first addition sections (52, 54 and 64) and the second addition sections (53, 55 and 65) comprise a plurality of A/D conversion sections configured to acquire the first to fourth reading signals (A to D) from the reading section (15) to AD convert the signals to digital signals by sampling at a predetermined timing.

3. An optical disk device according to claim 1, **characterized in that** the detection sections (51 and 66) comprise a counter (40) configured to count the frequency of differed acquired timing by repeating the comparison until the same value is attained by differing the acquired timing of the first addition sections (52, 54 and 64) and the second addition sections (53, 55 and 65) when the same value is not attained by comparing the first addition signal (A+C) and the second addition signal (B+D).

4. An optical disk according to claim 1, **characterized by** further comprising:
a clock generation sections (50) configured to generate a clock signal (CLK);
wherein the detection sections (51 and 66) are configured such that the acquired timings of the first addition sections (52, 54 and 64) and the second addition sections (53, 55 and 65) are differed in the clock unit of the clock signal (CLK) when the same value is not attained by comparing the first addition signal (A+C) and the second addition signal (B+D).

5. An optical disk device according to claim 1, **characterized in that** it are configured such that two four division elements for outputting the first reading signal (A) and the third reading signal (C) from the reading section (15) are located at a diagonal position in the four division element while the two four division elements for outputting the second reading signal (B) and the fourth reading signal (D) are located at a diagonal position in the four division element.

6. An optical disk device according to claim 1, **characterized by** further comprising a plurality of offset calculation sections (60 to 63) configured to supply to the first addition sections (52, 54 and 64) and the second addition sections (53, 55 and 65) values obtained by adding respective offset values to the first reading signal to the fourth signal (A to D) from the reading section.

7. An optical disk device according to claim 1, **characterized in that** the control sections (35 and 38) comprises a CPU (40) configured to receive the phase difference signals from the detection sections (51 and 66), and supply a drive signal in accordance with the value of the phase difference signal to an actuator (20) for driving an object lens (22) through which the beam spot passes thereby conducting the tracking control.

8. A phase difference detector **characterized by** comprising:
a comparison section (66) configured to compare a first signal (A+C) sampled at the first timing with a second signal (B+D) sampled at the second timing; and
detection sections (51 and 66) configured to detect a phase difference signal of the first signal (A+C) and the second signal (B+D) by repeating comparison until the same value is attained by differing timing with respect to the first and the second timing when the same value is not attained in the first signal (A+C) and the second signal (B+D) in the comparison section (66).

9. A phase difference detector according to claim 8, **characterized in that** the detection sections (51, 66) comprise a counter (40) configured to count the frequency by differing timing with respect to the first and second timings, and is configured to detect a phase difference signal between the first signal (A+C) and the second signal (B+D) based on a count result of the counter (40).

10. A phase difference detector according to claim 8, **characterized by** further comprising:
a clock generation section (50) configured to generate a clock signal (CLK),
wherein the detection sections (51 and 66) are configured such that the first timing and the second timing are differed in the clock unit of the clock signal (CLK) when the same value is not attained by comparing the first signal (A+C) and the second signal (B+D).

11. A method for detecting a phase difference **characterized by** comprising:
comparing (S10) a first signal (A+C) sampled at the first timing and a second signal (B+D) sampled at the second timing;
detecting (S11 to S14) a phase difference signal of the first signal (A+C) and the second signal (B+D) by repeating comparison until the same value is attained by differing timing with respect to the first and the second timing when the'same value is not attained in the first signal (A+C) and the second signal (B+D) in the comparison result.

12. A method for detecting a phase difference, according to claim 11, **characterized in that**
the detecting a phase difference signal (S11 to S14) counts the frequency by differing timing with respect to the first and second timings, and detects a phase difference signal between the first signal (A+C) and the second signal (B+D) based on a count result thereof.

13. A method for detecting a phase difference, according to claim 11, **characterized in that**
in the detecting a phase difference signal (S11 to S14), the first timing and the second timing are differed in the clock unit of a clock signal (CLK) outputted from a clock generation section (50) when the same value is not attained by comparing the first signal (A+C) and the second signal (B+D).
